# EUROPEAN PATENT SPECIFICATION

(11) **EP 2 798 283 B1**
(45) Date of publication and mention of the grant of the patent: **02.10.2019**
(21) Application number: 12813485.5
(22) Date of filing: 21.11.2012
(51) Int. Cl.: F25B 41/04, B01D 53/26, F24F 3/14, F24F 12/00

(54) **REFRIGERATION APPARATUS**
KÜHLVORRICHTUNG
APPAREIL DE RÉFRIGÉRATION

(30) Priority: 21.11.2011 IT PD20110365
(43) Date of publication of application: 05.11.2014
(73) Proprietor: M.T.A. S.p.A., 35026 Conselve PD (IT)
(72) Inventor: MANTEGAZZA, Mario, I-35020 Casalserugo (PD) (IT)
(74) Representative: Locas, Davide
(86) International application number: PCT/IB2012/056591
(87) International publication number: WO 2013/076660

(56) References cited:
- EP-A1- 0 308 532
- DE-U1- 20 213 546
- US-A- 2 169 900

## Description

The present invention relates to an apparatus for the treatment of a gas, in particular intended to lower the moisture content of a moist compressed air flow, of the type including the characteristic features mentioned in the preamble of the main claim.

In the context of technical plants for the treatment of compressed gases it is known to use refrigerating circuits intended to lower the temperature of the gas in order to perform the separation thereof from their moist component.

These refrigerating circuits typically comprise a compressor, a condenser, a throttling device and an evaporator which exchanges heat with the fluid to be treated in order to lower the temperature thereof.

The control of the aforementioned components therefore proves to be indispensable for ensuring operation of the circuit in an optimum manner when there is a variation in the load applied, this being understood as meaning the quantity of heat which must be exchanged with the gas to be treated.

For example, in the case of refrigerating circuits used in moist air drying plants it will be required to control the quantity of heat exchanged by the refrigerating circuit depending on the temperature and the flow rate of the incoming air. On the other hand, it can be easily understood that in these applications the parameters of the air to be processed may be easily variable depending on the working conditions or conditions occurring during the course of the day.

The refrigerating circuits, which have dimensions depending on the maximum load required, will exchange an excessive quantity of heat when the plant operates under a reduced load.

This excessive heat exchange involves mainly two drawbacks consisting of an excessive drop in temperature of the gas to be treated and, at the same time, wasted energy due to the fact that operation of the compressor is not correspondingly reduced. In this connection, it must also be understood that in these types of plant it is not possible to vary freely the operating parameters, such as the increase in pressure produced by the compressor or the heat exchanges which take place in the condenser and in the evaporator, these being defined by the design characteristics of the plant. Moreover, it is also not possible to switch off and switch on again the compressor at short intervals, a not insignificant time interval being required after stoppage and subsequent re-starting of the compressor.

In order to overcome these drawbacks, refrigerating circuits are used in which, depending on predetermined operating conditions, in particular temperature conditions which are reached, the operating conditions of the plant are varied so as to modify the inlet and/or outlet pressure or temperature of the refrigerating fluid in the evaporation portion, therefore varying in fact the heat exchange which takes place with the gas to be treated.

For example, known systems include those which use a by-pass branch, which allows specific components of the refrigerating circuit to be bypassed, so as to vary the operating parameters of the plant and limit consequently the refrigerating capacity thereof. These systems are typically provided with a control unit which activates the by-pass branch when predetermined conditions, in particular temperature conditions, are reached, thus allowing the plant to operate in a condition of maximum cooling or in a condition of relatively reduced cooling. An example of such system is disclosed in US 2,169,900, in which the flow of gaseous refrigerant from the evaporator is restricted/unrestricted according to the relative humidity of the air.

It is evident that the control of the parameters on the basis of which the system passes from one operating condition to another proves to be fundamental for correct operation of the system.

In fact, in particular in systems which envisage a drop in pressure of the refrigerating gas between the evaporator and the compressor by means of the by-pass branch, imprecise adjustment of the temperatures of the system could result in extremely severe damage to the evaporator. It is therefore evident that, generally speaking, it is necessary to avoid that, as a result of the transition between the two operating conditions of the refrigerating circuit, temperatures are reached such as to cause the formation of ice in the region of the evaporator/exchanger, in order to avoid possible damage.

A second solution is described in European patent EP 1,630,497 which proposes varying, depending on the temperature of the gas to be treated, the speed of a fan associated with the condenser. In this way, by slowing down the fan, condensation occurs at a higher temperature, with a consequent thermal raising of the entire cycle.

In this case also it is therefore essential to have precise control of the system, in particular of the gas temperature, in order to ensure correct operation of the plant.

A further solution is disclosed in WO 2011/063478, relating to a device for cool drying gas, which device comprises a heat exchanger whose primary part is the evaporator of a cooling circuit and the gas to be dried is guided through the secondary part of the heat exchanger to cool the gas and to condense water vapour out of the gas. At least one bypass pipe, in which expansion means are provided, connects the discharge side of the compressor to the intake side of the compressor.

This circuit is controlled only on the basis of a signal from a first measuring element, while in the event of full load only on the basis of the signal from a second measuring element.

Another technical field in which control of heat exchange is considered, is represented by domestic refrigerators comprising both a refrigerator and a freezer compartment. For example, German utility model DE 202 16546 discloses a refrigerator with a cooling circuit having a freezing compartment and a cooling compartment each with its own evaporator coil. In the circuit there is a single compressor followed by a condenser, a hot tube and a filter. A three-way solenoid valve follows the filter and is connected to a thermostat. The circuit includes cooler and freezer capillary tubes and there are heat exchangers using the cold vapor returning from the evaporators to pre-cool the liquid going to the evaporators. Also in this case, the heat exchange cannot be precisely controlled according to the working condition of the apparatus.

A compressed air drier comprising a plurality of sensor for detecting the temperature of the compressed air at the system outlet is disclosed in The technical problem forming the basis of the present invention is therefore that of providing an apparatus for drying gas which is structurally and operationally designed so to allow the abovementioned drawbacks mentioned with reference to the prior art to be overcome.

This problem is solved by the apparatus according to Claim 1 and by the method according to Claim 10.

The present invention poses a number of significant advantages. The main advantage consists in the fact that the apparatus according to the present invention allows the temperature of the gas which is to be treated to be controlled, achieving at the same time a reduction in the energy consumption, without requiring additional components compared to the known constructionally complex or costly plants.

Further advantages, characteristic features and the modes of use of the present invention will become clear from the following detailed description of a number of embodiments, provided solely by way of a non-limiting example. Reference shall be made to the figures in the accompanying drawings in which:
Figures 1A and 1B are, respectively, a perspective view and a side view which show a device for drying moist gas used in association with the apparatus for refrigerating a process fluid according to the present invention;
Figure 2 is a schematic illustration of an apparatus for refrigerating a process fluid and the drying device associated with it according to the present invention;
Figure 3 is a graph which shows a temperature value of the gas to be treated in relation to the time and which illustrates operation of the apparatus according to the present invention; and
Figure 4 is a schematic illustration of a second embodiment of the apparatus for refrigerating a process fluid according to the present invention.

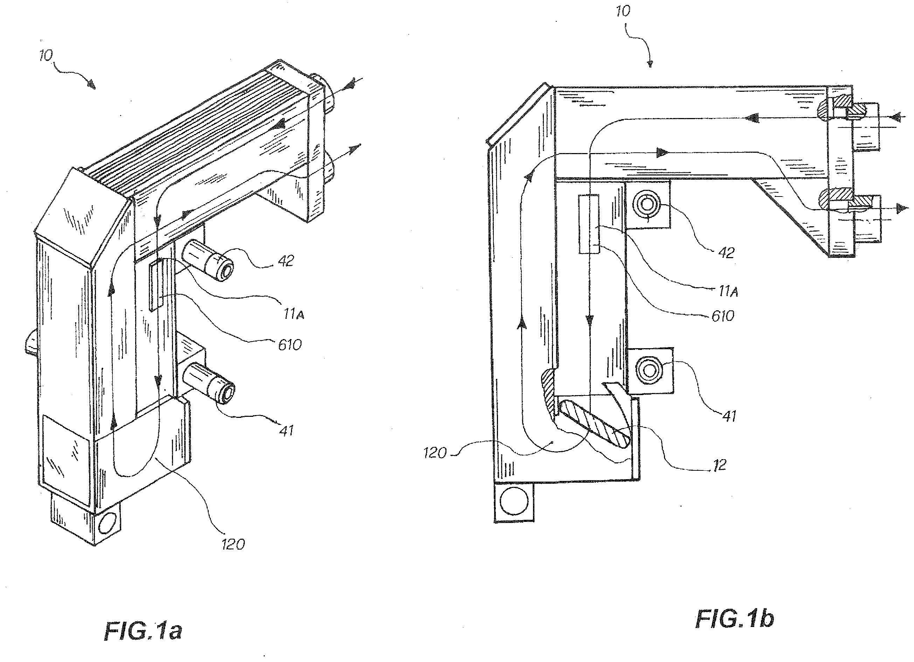

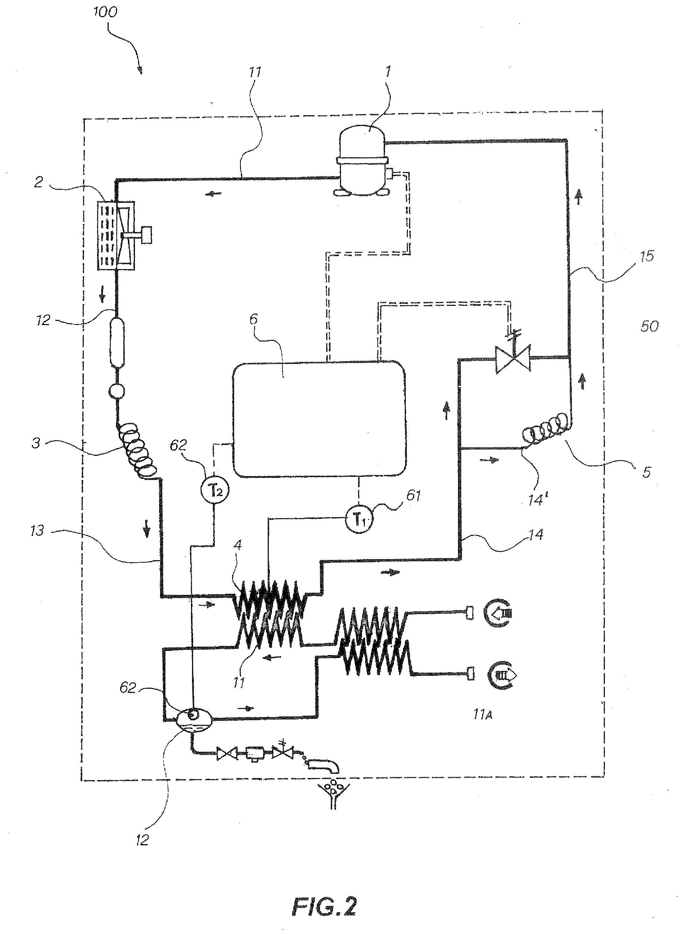

With reference initially to Figures 1A and 2, an apparatus for the refrigeration of a process fluid is indicated schematically in its entirety by the number 100 and is intended to be used in association with a drying device 10 for the treatment of compressed gas to be dehumidified.

The drying device 10 is shown in Figures 1A and 1B and comprises an inlet 101 and an outlet 102 for the air or other fluid to be treated, which moves along a path defined essentially by a horizontal portion 103 and a vertical portion 104 of the device 10.

Along the vertical portion 104, the device 10 comprises a heat exchanger 11 inside which the air exchanges heat with a process fluid supplied by the apparatus 100. For this purpose the drying device 10 has, along the vertical portion 104, an inlet 41 and an outlet 42 for the process fluid, which are disposed so that the two flows of the process fluid and the gas to be treated flow in opposite directions and perform a heat exchange. It should be noted moreover that the heat exchanger will form a common part with the apparatus 100, in which, following heat exchange between gas to be treated and process fluid, it performs the function of an evaporator, indicated by the reference number 4. At the outlet 11B of the exchanger the gas will therefore be cooled, bringing it to the required dew point, in order to be conveyed to a condensate separator 12, inside which the moist component present in the gas to be treated is separated.

At the outlet of the condensate separator 12, the gas follows a return path, in order to be conveyed into a gas-gas exchanger 103 extending mainly in a horizontal direction, where a further heat exchange takes place between the incoming gas flow and the outgoing gas flow.

The apparatus for refrigeration of the process fluid is therefore illustrated schematically in Figure 2. As previously mentioned, with the apparatus 100 according to the present invention it is possible to refrigerate a process fluid, which is employed in the drying device 10 so that the gas to be treated reaches a predetermined dew point.

It is evident, however, that the same concepts which will be described below may be used also for different applications.

The apparatus 100 is formed by a circuit for the process fluid along which the following are disposed in succession: a compressor 1, a condenser 2, a first throttling device 3 and the evaporator 4. These components are connected by respective connecting portions 11, 12, 13, 14, 15 along which the process fluid is circulated.

It can be seen how the aforementioned components form a refrigerating circuit. The process fluid, for example a refrigerating fluid such as R134a, is compressed inside the compressor 1, bringing it to the pressure value p₁ and is then brought to a condition the same as or close to that of a saturated liquid by means of condensation at a constant pressure inside the condenser 2. At the outlet of the condenser the fluid is subjected to throttling in the device 3, being cooled and being brought to a pressure p₂.

The cooled process fluid is used to cool the gas to be treated by means of the evaporator 4 which, as illustrated above, is associated with the drying device 10, forming the heat exchanger 11, as illustrated above.

The refrigerating circuit is closed therefore by conveying again to the compressor 1 the process fluid, which following heat exchange is in a temperature condition slightly higher than that of saturated steam at the pressure p2.

In addition to the aforementioned components, the apparatus 100 also comprises a second throttling device 5 disposed along a second portion 14' of the circulation path which connects the exchanger 4 and the compressor 1. In particular, this second portion is arranged in parallel with the portion 14 and, as will be illustrated in greater detail below, the process fluid may be conveyed to the compressor 1 mainly by means of the first portion 14 or exclusively by means of the second portion 14', being subjected, in this latter case, to the throttling action by means of the second throttling device 5. It should be noted the term "mainly" is intended to indicate that, even when the fluid passes through the first portion 14, a small fraction of its flow rate may pass along the second portion 14'. This flow rate portion will, however, not be of a size as to cause in the overall flow rate of the fluid which reaches the compressor a significant variation in pressure following the throttling performed by the second throttling device.

In order to select the portion for passage of the main fraction of the fluid, along the portion 14 there is present a control valve 50 which can be actuated by means of control unit 6 which, when open, conveys the process fluid to the compressor 1 substantially in the condition output from the exchanger 4, while, when closed, it interrupts the passage along the first portion 14, conveying the process fluid to the compressor after a further throttling and, consequently, at a pressure lower than in the preceding case.

The control unit 6 operates the control valve 50 depending on a characteristic parameter of the temperature level of the gas to be treated in the drying device 10. It is evident that, in the case of different applications, the parameter considered may be different provided that it is related to the temperature values of the air, or other fluid or gas to be treated, with which the process fluid exchanges heat.

In particular, control of the temperature level of the gas to be treated will allow the required load to be monitored, understood as being the quantity of heat which must be removed from the gas to be treated in order to obtain drying thereof in the drying device.

Consequently, the characteristic parameter comprises at least one temperature value T1, which is detected by a temperature probe 61 disposed in the region of the heat exchanger 4. The probe 61 is disposed in the region of an inlet portion of the exchanger 11, namely in the region of the inlet where the gas to be treated enters the exchanger 11.

In this way, when the load drops beyond a certain level and consequently the temperature probe 61 detects a temperature value T1 below a predetermined threshold T_{eb}, the control unit 60 will close the valve 50, causing the process fluid to pass through the second throttling device 5.

Consequently the pressure of the refrigerating circuit is lowered and rarefaction of the gas drawn into the compressor is obtained, together with a consequent reduction in the compressor mass flow rate and consequent reduction of the refrigerating capacity in the evaporator with a corresponding lowering of the electric power used by the compressor.

Closing of the valve 50 and the consequent further throttling of the process fluid therefore allows control of the temperature of the gas which is to be treated, preventing it from falling below excessively low values incompatible with the drying device 10.

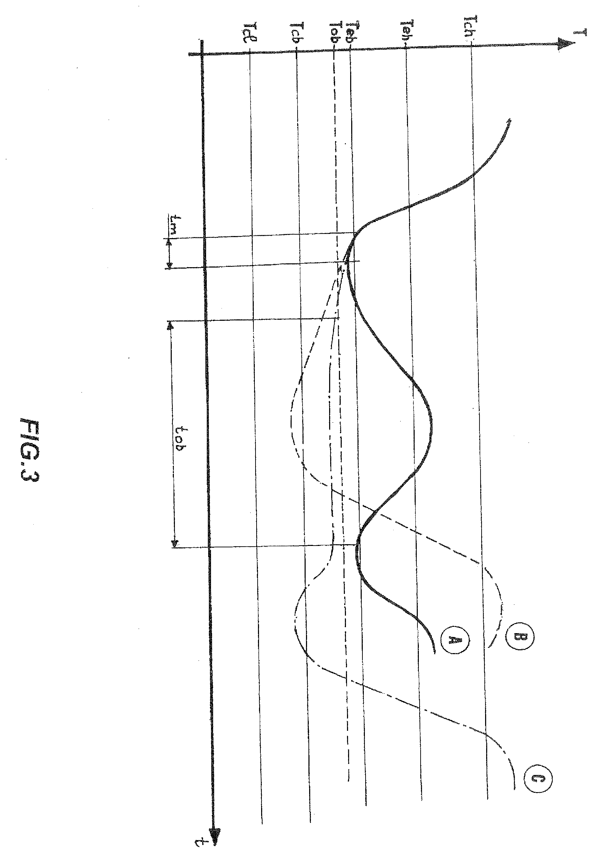

Operation of the apparatus is therefore shown in Figure 3.

When, owing to a reduction in the thermal load, the temperature T1 detected by the probe 61 falls below the value T_{eb}, the valve 50 is closed and the second throttling is performed by means of the device 5, therefore producing diversion of the flow as illustrated above and the consequent additional loss of pressure.

It should be noted that a minimum time interval tₘ may be envisaged, as from the instant when the threshold temperature T_{eb} is reached, during which interval the fluid is in any case subjected to the additional loss of pressure. Owing to this feature it is possible to keep the valve closed for a minimum time interval tₘ even if the temperature fluctuates about the aforementioned threshold temperature T_{eb}.

At this point, three different conditions may arise.

In a first case, described by the curve A shown as a continuous line, following further throttling, the temperature increases again until the probe 62 detects a temperature T2 higher than a second threshold temperature Tₑₕ. Once the temperature detected by the probe has exceeded this temperature Tₑₕ, the valve 50 is opened again and the apparatus 100 operates again in the nominal conditions where there is maximum cooling of the process fluid. If the temperature, following restoration of these operating conditions, returns below the threshold temperature T_{eb}, the valve will again be closed, bringing the apparatus back into the abovementioned conditions where there is less cooling of the fluid.

In this way a cyclical transition between the two working conditions of the apparatus 100 is possible.

It should be noted that the compressor constitutes in overall terms the critical mechanical component of the apparatus. If it were to be operated cyclically with a high frequency, the compressor would be subject to rapid deterioration with a drastic reduction also in its overall working life. On the other hand, any cyclical opening/closing of the valve 50, also with relatively high frequency, does not result in any problems of operation of the compressor or any risk of damage to the apparatus.

In the second case, described by the broken-line curve B, after the threshold temperature T_{eb} has been exceeded, the thermal load is reduced such as to cause a further drop in temperature.

When the probe T1 detects a threshold temperature T_{cb}, the compressor is switched off and consequently an increase in temperature is obtained until the temperature T_{ch} detected by the probe T2 is reached, beyond which temperature the compressor is again activated so as to assume the maximum cooling or partial cooling condition.

It should be noted that, in this case, the time required to achieve the thermal gradient between the temperature for switching off the compressor T_{cb} and the temperature for subsequent switching-on T_{ch}, also in view of the low load conditions of the system at which the temperature T_{cb} may be reached, is sufficient to allow the switching on/off cycle of the compressor. In a third case, described by the curve C shown in the form of a dot-dash line, once the temperature T_{eb} for activation of the valve 50 has been reached, the system maintains a more or less constant temperature, below a further threshold temperature T_{ob}, lying between the temperature T_{eb} for activation of the valve and the temperature T_{cb} for switching off the compressor. In this case, the load required of the system is in any case reduced, there being no increase in temperature following switching to the lower cooling mode, but, differently from the preceding case, it is not sufficiently reduced to cause a further drop in temperature.

However, if this condition is maintained for a sufficiently long time, in particular for a time period greater than a predetermined interval t_{ob}, it may be assumed that the load is sufficiently reduced to be able to switch off the compressor. However, before performing switching off, once the interval t_{ob}, has lapsed, the valve 50 is deactivated, causing a further drop in temperature until the temperature T_{cb} for switching off the compressor is reached and the procedure is continued in the same way as for the preceding case. In addition to these thresholds, the system also envisages a bottom temperature limit T_{cl} which, if detected by the first or second temperature probe, will cause instantaneous switching-off of the compressor 1 until the threshold temperature T_{ch} for switching on again the compressor is reached.

With reference to Figures 1A and 1B, it will be noted that the first temperature probe 61 is arranged in a measurement chamber 610 formed in a wall of the heat exchanger 11 and has the function of detecting whether the wall temperature remains above 0° in order to prevent freezing of the condensate. It is evident that the measurement chamber may be simply welded or fixed in an equivalent manner onto the wall of the exchanger or may be formed directly in the structure of the exchanger by means of a suitable machining operation.

According to a preferred embodiment, the evaporator is of the "plate/fin" type, i.e. formed by means of a plurality of superimposed plates 12 arranged alternating with a set of corrugated fins or, alternatively, of the "bar and plate" type. It therefore has intrinsically a metallic mass which possesses a certain thermal capacity, i.e. a thermal mass, albeit of relatively small magnitude. It is clear that such a small thermal mass is unable to withstand 90% of the thermal load of the apparatus in order to prolong effectively the interval between two consecutive switching-on operations of the compressor. It is able, however, to withstand an albeit reduced percentage amount of the thermal load of the apparatus, for example 10-20%.

The pressure difference of the refrigerating gas during the second throttling operation is chosen so that the reduction in the refrigerating power due to the second throttling is such as to compensate for the "lack" of thermal mass of the evaporator compared to the energy requirement of the apparatus. Basically, the second throttling operation causes the apparatus to work with a refrigerating power equal to 10-20% of the original power (when the electric valve 50 is open).

The invention is improved in that, in addition to the first probe which "senses" the wall temperature of the exchanger in order to prevent it from dropping to the temperature where freezing of the condensed moisture occurs - something which would irremediably damage the evaporator - a second temperature probe 62 is provided, said probe being arranged along the path of the gas to be treated, downstream of the exchanger 11 in order to detect a second temperature value T2 corresponding to the temperature of the processed air.

The second temperature probe 62 is disposed inside a housing portion 120 of the condensate separator 12.

In this case, as illustrated above, the process fluid is conveyed to the second throttling device 5 when the first probe 61 detects a temperature T1 lower than a first threshold temperature T_{eb}. Instead, restoration of the maximum cooling conditions, with the second throttling device which is again excluded, occurs depending on the temperature detected by the second probe 62, in particular when the latter detects a temperature T2 higher than a second threshold temperature Tₑₕ.

It has been found that the profile of the air temperature downstream of the evaporator T2 during operation indicated above varies with a delay and less "nervously" than the wall temperature T1 of the evaporator itself.

T1 is therefore suitable for controlling closure of the valve 50, with the consequent activation of the second throttling device, and/or switching off of the compressor - namely is suitable as a bottom temperature threshold for preventing the formation of ice in the evaporator - while it is not so suitable for controlling the opening again of the valve 50 and/or switching on again of the compressor since the wall temperature of the evaporator rises rapidly or in any case more rapidly than the air temperature downstream of the evaporator. Therefore the temperatures detected by the second probe 62 may be advantageously used for these control operations. In this way it is possible to have better control over the temperature level of the gas to be treated, precisely because it is possible to observe the real temperature conditions in the exchanger while detection of the temperature T1 would be used to detect when the limit conditions are exceeded so as to keep the valve 50 closed in advance to a certain extent compared to the real conditions of the exchanger.

The presence of the second temperature probe 62 therefore enables the efficiency of the apparatus to be increased.

It should be noted, finally, that the refrigerating circuit may have further portions, not shown in the figures, which are in parallel with the portions 14 and 14' and on which further throttling devices are present. These further portions will be provided with respective control valves so as to perform further throttling, in the case where two or more different reduced refrigerating levels for the apparatus 100 and consequently gradual control of the refrigerating power of the apparatus are envisaged.

Moreover, it must be pointed out that the control method using two temperature probes 61 and 62 may be applied to any type of apparatus for the treatment of moist gases in which the refrigerating circuit is able to operate in at least two thermal load conditions, i.e. one condition where there is maximum heat exchange with the gas to be treated and a second condition where the exchange is relatively lower.

In fact, the control unit 6 may be used to switch operation of the refrigerating circuit between the two conditions, always depending on the temperatures detected by the two probes.

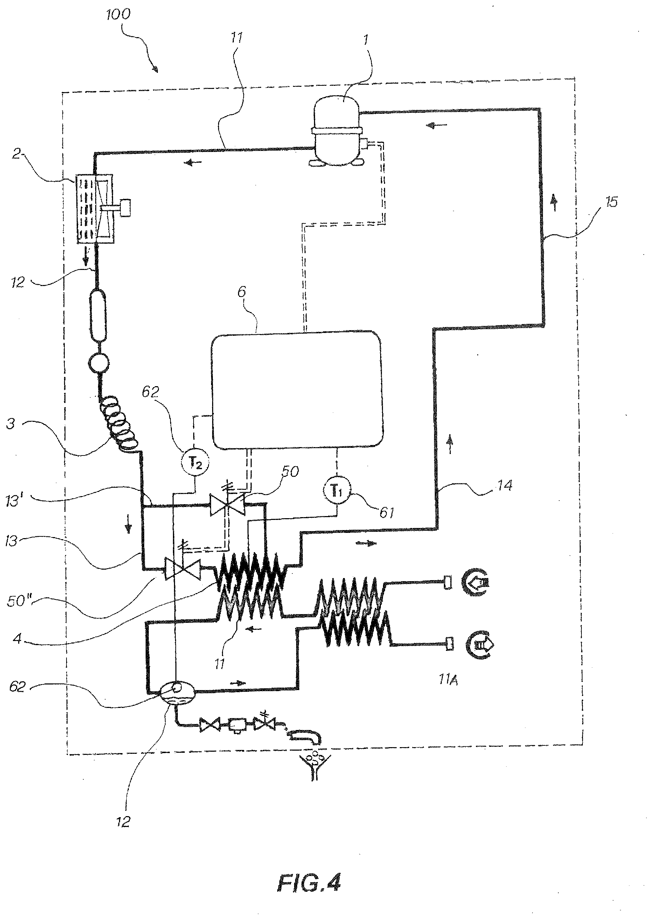

With reference to Figure 4, a second embodiment of the apparatus according to the present invention envisages the use of a by-pass portion 13' disposed at the outlet of the first throttling device 3 so as to exclude partially or totally the evaporator 4 from the process fluid circuit.

More precisely, the by-pass portion 13' allows diversion of the process flow output from the throttling device 3 into an intermediate position along the evaporator 4. In this way, the heat exchange between process fluid and gas will take place along a bottom portion and, consequently, there will be a smaller heat exchange.

In order to obtain the diversion of the process fluid flow rate, the present embodiment envisages the use of two shut-off valves 50' and 50" disposed respectively along the by-pass portion 13' and upstream of the evaporator 4, which are used for alternately allowing or preventing the passage of fluid along the respective portions. It is evident that the control unit will perform opening of one valve and consequent closing of the other valve, in order to select operation in the maximum cooling condition (when the fluid flows along the whole of the evaporator) or reduced cooling condition (when the fluid passes along the portion 13' and omits a part or all of the evaporator). The choice of the operating conditions of the apparatus occurs in a manner similar to that described above, depending on the temperatures T1 and T2 which are detected by the probe 61 and by the probe 62, respectively.

The invention therefore solves the problem posed, achieving at the same time a plurality of advantages, including the possibility of checking the temperature level of the gas to be treated, by means of a simple and reliable solution. In addition to the advantages illustrated above, it must be pointed out that, compared to the other known solutions, by lowering the pressure at the compressor inlet it is possible to achieve optimum operation of the compressor in any case, without wasted energy, even when the apparatus is working in the reduced cooling mode. Moreover, the specific conditions in which the compressor works in this mode allow a reduction in the energy consumption of the compressor, reducing the energy losses when the required thermal load is reduced.

In addition, owing to the possibility of switching off the compressor periodically, it is possible to achieve significant savings in energy when the load is very low or completely zero, during periods where no treatment of the fluid is required, without the need to use costly constructional solutions.

## Claims

1. An apparatus (100) for the dehumidification treatment of a gas, comprising a refrigerating circuit (11, 12, 13, 14, 15) for a process fluid along which are disposed in succession:
- a compressor (1);
- a condenser (2);
- a first throttling device (3);
- an evaporator (4) which constitutes a heat exchanger (11) for performing a heat exchange with the gas to be treated, in such a way as to effect the dehumidification thereof,
the refrigerating circuit comprising:
- a by-pass portion (13'; 14'), in which a flow rate of process fluid can be diverted for the purpose of reducing the refrigeration capacity of the circuit;
- a control unit (6) suitable for diverting the flow rate of process fluid depending on temperature parameters of the apparatus;
wherein the control unit (6) comprises a first temperature probe (61) disposed in the region of a zone of heat exchange between the process fluid and the gas to be treated and a second temperature probe (62) disposed downstream of the heat exchanger (11) formed by the evaporator (4), the probes (61, 62) being arranged for the detection of said temperature parameters, wherein the second temperature probe (62) is arranged to detect a temperature of the gas to be treated downstream of the heat exchanger (11), and wherein the apparatus (100) further comprises a condensate separator (12) disposed downstream of the heat exchanger (11) for the dehumidification of the gas to be treated,
**characterized in that** the first temperature probe (61) is disposed in the region of an inlet portion (11A) for the gas to be treated in the heat exchanger (11) and the second temperature probe (62) is disposed inside a housing portion of the condensate separator (12).

2. An apparatus (100) according to any one of the preceding claims, wherein the first temperature probe (61) is placed in a measuring well (610) provided in the region of a wall of the heat exchanger (11).

3. An apparatus (100) according to any one of the preceding claims, wherein the by-pass portion (14') comprises a second throttling device (5).

4. An apparatus (100) according to any one of the preceding claims, wherein the by-pass portion (14') connects the exchanger (4) and the compressor (1).

5. An apparatus (100) according to claim 4, wherein the by-pass portion is disposed in parallel with a connecting portion (14) between exchanger (4) and compressor (1) which comprises a control valve (50) actuated by the control unit (6) for selectively permitting the passage of the fluid into the first connecting portion (14) or preventing such passage, diverting the flow rate of the process fluid into the by-pass portion (14').

6. An apparatus (100) according to claim 5, wherein the control unit (6) is operatively connected to the temperature probes (61, 62) and to the control valve (50) for controlling the opening/closure of the control valve (50) depending on the temperatures (T1, T2) detected by the probes (61, 62).

7. An apparatus (100) according to the preceding claim, wherein the compressor (1) is operatively connected to the control unit (6), in such a way as to be deactivated when the temperature (T1) detected by the first probe (61) remains below a threshold value (T_{ob}) for at least a predetermined time interval (t_{ob}) and/or when the temperature (T1) drops below a further predetermined value (T_{cb}).

8. An apparatus (100) according to any one of claims 1 to 2, wherein with the by-pass portion (13') there connects a portion of said circuit (11, 12, 13, 14, 15) downstream of the first throttling device (3) and the evaporator (4) in the region of a position intermediate between the inlet and the outlet of the path of the operating fluid along the evaporator (4).

9. An apparatus (100) according to any one of claims 1 to 2, wherein with the by-pass portion (13') there connects a portion of said circuit (11, 12, 13, 14, 15) downstream of the first throttling device (3) and a circuit portion downstream of the evaporator (4).

10. A method for the control of an apparatus for the dehumidification treatment of a gas, the apparatus including a refrigerating circuit (11, 12, 13, 14, 15) for a process fluid according to claim 1, in which the fluid is cooled by means of compression, condensation, throttling and subsequent evaporation, and comprising a heat exchanger (11) which exchanges heat during the evaporation of the process fluid with the gas to be treated in such a way as to cool it, wherein the heat exchange performed by the exchanger is variable in a controlled manner depending on the temperature values (T1, T2) detected in the region of at least two different positions, respectively in the region of a zone of heat exchange between the process fluid and gas to be treated, at an inlet portion (11A) for the gas to be treated in the heat exchanger (11) and downstream of the heat exchanger (11), along the path of the gas to be treated, inside a housing portion of the condensate separator (12), wherein the heat exchange performed by the exchanger is varied by subjecting the process fluid to an additional loss of pressure, wherein the step of subjecting the fluid to the additional loss of pressure is performed when a first temperature (T1) is detected, in the region of the zone of heat exchange between the process fluid and gas, below a predetermined threshold temperature (T_{eb}), wherein the step of subjecting the fluid to the additional loss of pressure is interrupted when a second temperature (T2) is detected, downstream of the heat exchanger (11), higher than a second threshold temperature (Tₑₕ).

11. A method according to claim 10, wherein the fluid is subjected to the additional loss of pressure for a period of time which is not less than a predetermined time interval (tₘ) starting from a moment in which the threshold temperature (T_{eb}) is reached.

12. A method according to claim 11, wherein the compression of the process fluid is interrupted if, after the threshold temperature (T_{eb}) is reached at which the fluid is subjected to the additional loss of pressure, the temperature (T1) detected by the first probe (61) does not undergo any rise during a time interval (t_{ob}) and/or drops below a further threshold value (T_{cb}).

## Patentansprüche

1. Vorrichtung (100) zur Entfeuchtungsbehandlung eines Gases, das einen Kältekreislauf (11, 12, 13, 14, 15) für ein Prozessfluid aufweist, entlang dem nacheinander angeordnet sind:
- ein Kompressor (1);
- ein Kondensator (2);
- eine erste Drosselvorrichtung (3);
- ein Verdampfer (4), der einen Wärmetauscher (11) zum Ausführen eines Wärmeaustausches mit dem zu behandelnden Gas derart bildet, um dessen Entfeuchtung zu bewirken,
- wobei der Kältekreislauf aufweist:
- einen Bypassabschnitt (13'; 14'), in dem eine Durchflussmenge eines Prozessfluids zum Zweck einer Reduzierung der Kälteleistung des Kreislaufs umgeleitet werden kann;
- eine Steuereinheit (6), die zum Umleiten der Durchflussmenge eines Prozessfluids in Abhängigkeit von Temperaturparametern der Vorrichtung geeignet ist;
- wobei die Steuereinheit (6) eine erste Temperatursonde (61), die im Bereich einer Zone eines Wärmeaustausches zwischen dem Prozessfluid und dem zu behandelnden Gas angeordnet ist, und eine zweite Temperatursonde (62) aufweist, die stromabwärts des vom Verdampfer (4) gebildeten Wärmetauschers (11) angeordnet ist, wobei die Sonden (61, 62) zur Erfassung der Temperaturparameter angeordnet sind, wobei die zweite Temperatursonde (62) angeordnet ist, um eine Temperatur des zu behandelnden Gases stromabwärts des Wärmetauschers (11) zu erfassen, und wobei die Vorrichtung (100) ferner einen Kondensatabscheider (12), der stromabwärts des Wärmetauschers (11) angeordnet ist, zur Entfeuchtung des zu behandelnden Gases aufweist,
- **dadurch gekennzeichnet, dass** die erste Temperatursonde (61) im Bereich eines Einlassabschnitts (11A) für das zu behandelnde Gas im Wärmetauscher (11) angeordnet ist und die zweite Temperatursonde (62) innerhalb eines Gehäusebereichs des Kondensatabscheiders (12) angeordnet ist.

2. Vorrichtung (100) nach einem der vorhergehenden Ansprüche, wobei die erste Temperatursonde (61) in einem Messschacht (610) angeordnet ist, der im Bereich einer Wand des Wärmetauschers (11) vorgesehen ist.

3. Vorrichtung (100) nach einem der vorhergehenden Ansprüche, wobei der Bypassabschnitt (14 ') eine zweite Drosselvorrichtung (5) aufweist.

4. Vorrichtung (100) nach einem der vorhergehenden Ansprüche, wobei der Bypassabschnitt (14 ') den Wärmetauscher (4) und den Kompressor (1) verbindet.

5. Vorrichtung (100) nach Anspruch 4, wobei der der Bypassabschnitt parallel zu einem Verbindungsabschnitt (14) zwischen dem Wärmetauscher (4) und dem Kompressor (1) angeordnet ist, der ein Steuerventil (50), das durch die Steuereinheit (6) betätigt wird, zum wahlweisen Ermöglichen des Durchgangs des Fluids in den ersten Verbindungsabschnitt (14) oder zum Verhindern einen derartigen Durchgangs aufweist, wobei die Durchflussmenge des Prozessfluids in den Bypassabschnitt (14 ') umgeleitet wird.

6. Vorrichtung (100) nach Anspruch 5, wobei die Steuereinheit (6) mit den Temperatursonden (61, 62) und dem Steuerventil (50) zum Steuern des Öffnens / Schließens des Steuerventils (50) in Abhängigkeit von den durch die Sonden (61, 62) erfassten Temperaturen (T1, T2) wirkverbunden ist.

7. Vorrichtung (100) nach dem vorhergehenden Anspruch, wobei der Kompressor (1) mit der Steuereinheit (6) derart wirkverbunden ist, um deaktiviert zu werden, wenn die Temperatur (T1), die durch die erste Sonde (61) erfasst wird, für zumindest ein vorgegebenes Zeitintervall (t_{ob}) unter einem Schwellenwert (T_{ob}) bleibt und / oder wenn die Temperatur (T1) unter einen weiteren vorgegebenen Wert (T_{cb}) fällt.

8. Vorrichtung (100) nach einem der Ansprüche 1 bis 2, wobei der Bypassabschnitt (13 ') einen Abschnitt des Kreislaufs (11, 12, 13, 14, 15) stromabwärts der ersten Drosselvorrichtung (3) und den Verdampfer (4) im Bereich einer mittleren Position zwischen dem Einlass und dem Auslass des Wegs des Betriebsfluids entlang des Verdampfers (4) verbindet.

9. Vorrichtung (100) nach einem der Ansprüche 1 bis 2, wobei der Bypassabschnitt (13 ') einen Abschnitt des Kreislaufs (11, 12, 13, 14, 15) stromabwärts der ersten Drosselvorrichtung (3) und einen Kreislaufabschnitt stromabwärts des Verdampfers (4) verbindet.

10. Verfahren zur Steuerung einer Vorrichtung zur Entfeuchtungsbehandlung eines Gases, wobei die Vorrichtung einen Kältekreislauf (11, 12, 13, 14, 15) für ein Prozessfluid nach Anspruch 1 umfasst, in dem das Fluid durch Einrichtungen zur Kompression, Kondensation, Drosselung und anschließender Verdampfung gekühlt wird, und einen Wärmetauscher (11) aufweist, der Wärme während der Verdampfung des Prozessfluids mit dem zu behandelnden Gas derart austauscht, um es zu kühlen, wobei der Wärmeaustausch, der durch den Wärmetauscher ausgeführt wird, auf gesteuerte Weise in Abhängigkeit von Temperaturwerten (T1, T2), die im Bereich von zumindest zwei verschiedenen Positionen erfasst werden, jeweils im Bereich einer Zone eines Wärmeaustausches zwischen dem Prozessfluid und dem zu behandelnden Gas an einem Einlassabschnitt (11A) für das zu behandelnde Gas im Wärmetauscher (11) und stromabwärts des Wärmetauschers (11) entlang des Weges des zu behandelnden Gases innerhalb eines Gehäusebereichs des Kondensatabscheiders (12) variabel ist, wobei der Wärmeaustausch, der durch den Wärmetauscher ausgeführt wird, variiert wird, indem das Prozessfluid einem zusätzlichen Druckverlust ausgesetzt ist, wobei der Schritt, in dem das Fluid dem zusätzlichen Druckverlust ausgesetzt ist, ausgeführt wird, wenn eine erste Temperatur (T1) im Bereich der Zone eines Wärmeaustausches zwischen dem Prozessfluid und dem Gas unterhalb einer vorgegebenen Schwellenwerttemperatur (T_{eb}) erfasst wird, wobei der Schritt, in dem das Fluid dem zusätzlichen Druckverlust ausgesetzt ist, unterbrochen wird, wenn eine zweite Temperatur (T2) stromabwärts des Wärmetauschers (11) erfasst wird, die größer als eine zweite Schwellenwerttemperatur (Tₑₕ) ist.

11. Verfahren nach Anspruch 10, wobei das Fluid dem zusätzlichen Druckverlust für einen Zeitraum ausgesetzt ist, der nicht kürzer als ein vorbestimmtes Zeitintervall (tₘ) ist, das ab einem Moment beginnt, in dem die Schwellenwerttemperatur (T_{eb}) erreicht ist.

12. Verfahren nach Anspruch 11, wobei die Kompression des Prozessfluids unterbrochen wird, wenn, nachdem die Schwellenwerttemperatur (T_{eb}) erreicht ist, bei der das Fluid dem zusätzlichen Druckverlust ausgesetzt ist, die von der ersten Sonde (61) erfasste Temperatur (T1) während eines Zeitintervalls (t_{ob}) nicht ansteigt und / oder unter einen weiteren Schwellenwert (T_{cb}) fällt.

## Revendications

1. Appareil (100) pour le traitement de déshumidification d'un gaz, comprenant un circuit de réfrigération (11, 12, 13, 14, 15) pour un fluide de travail qui sont disposés successivement :
- un compresseur (1) ;
- un condenseur (2) ;
- un premier dispositif d'étranglement (3) ;
- un évaporateur (4) qui constitue un échangeur de chaleur (11) pour la réalisation d'un échange de chaleur avec le gaz à traiter, de manière à effectuer la déshumidification de celui-ci,
le circuit de réfrigération comprenant :
- une portion de dérivation (13' ; 14') dans laquelle un débit de fluide de travail peut être dévié afin de réduire la capacité de réfrigération du circuit ;
- une unité de commande (6) adaptée pour dévier le débit du fluide de travail selon des paramètres de température de l'appareil ;
dans lequel l'unité de commande (6) comprend une première sonde de température (61) disposée dans la région d'une zone d'échange de chaleur entre le fluide de travail et le gaz à traiter et une deuxième sonde de température (62) disposée en aval de l'échangeur de chaleur (11) formé par l'évaporateur (4), les sondes (61, 62) étant agencées pour la détection desdits paramètres de température, dans lequel la deuxième sonde de température (62) est agencée pour détecter une température du gaz à traiter en aval de l'échangeur de chaleur (11), et dans lequel l'appareil (100) comprend en outre un séparateur de condensat (12) disposé en aval de l'échangeur de chaleur (11) pour la déshumidification du gaz à traiter,
**caractérisé en ce que** la première sonde de température (61) est disposée dans la région d'une portion d'entrée (11A) pour le gaz à traiter dans l'échangeur de chaleur (11) et la deuxième sonde de température (62) est disposée à l'intérieur d'une portion de boîtier du séparateur de condensat (12).

2. Appareil (100) selon l'une quelconque des revendications précédentes, dans lequel la première sonde de température (61) est placée dans un puits de mesure (610) prévu dans la région d'une paroi de l'échangeur de chaleur (11).

3. Appareil (100) selon l'une quelconque des revendications précédentes, dans lequel la portion de dérivation (14') comprend un second dispositif d'étranglement (5).

4. Appareil (100) selon l'une quelconque des revendications précédentes, dans lequel la portion de dérivation (14') raccorde l'échangeur (4) et le compresseur (1).

5. Appareil (100) selon la revendication 4, dans lequel la portion de dérivation est disposée parallèlement à une portion de raccordement (14) entre l'échangeur (4) et le compresseur (1) qui comprend une valve de commande (50) actionnée par l'unité de commande (6) pour sélectivement permettre le passage du fluide dans la première portion de raccordement (14) ou empêcher un tel passage, en déviant le débit du fluide de travail dans la portion de dérivation (14').

6. Appareil (100) selon la revendication 5, dans lequel l'unité de commande (6) est raccordée en fonctionnement aux sondes de température (61, 62) et à la valve de commande (50) pour la commande de l'ouverture/la fermeture de la valve de commande (50) selon les températures (T1, T2) détectées par les sondes (61, 62).

7. Appareil (100) selon la revendication précédente, dans lequel le compresseur (1) est raccordé en fonctionnement à l'unité de commande (6) de manière à être désactivé lorsque la température (T1) détectée par la première sonde (61) reste sous une valeur seuil (T_{ob}) pour au moins un intervalle de temps prédéterminé (t_{ob}) et/ou lorsque la température (T1) chute sous une autre valeur prédéterminée (T_{cb}).

8. Appareil (100) selon l'une quelconque des revendications 1 et 2, dans lequel avec la portion de dérivation (13') on raccorde une portion dudit circuit (11, 12, 13, 14, 15) en aval du premier dispositif d'étranglement (3) et l'évaporateur (4) dans la région d'une position intermédiaire entre l'entrée et la sortie de la voie du fluide opérationnel le long de l'évaporateur (4).

9. Appareil (100) selon l'une quelconque des revendications 1 et 2, dans lequel avec la portion de dérivation (13') on raccorde une portion dudit circuit (11, 12, 13, 14, 15) en aval du premier dispositif d'étranglement (3) et une portion de circuit en aval de l'évaporateur (4).

10. Procédé de commande d'un appareil pour le traitement de déshumidification d'un gaz, l'appareil incluant un circuit de réfrigération (11, 12, 13, 14, 15) pour un fluide de travail selon la revendication 1, dans lequel le fluide est refroidi par la compression, la condensation, l'étranglement et l'évaporation ultérieure, et comprenant un échangeur de chaleur (11) qui échange la chaleur pendant l'évaporation du fluide de travail avec le gaz à traiter de manière à le refroidir, dans lequel l'échange de chaleur réalisé par l'échangeur est variable de manière commandée selon les valeurs de température (T1, T2) détectées dans la région des au moins deux positions différentes, respectivement dans la région d'une zone d'échange de chaleur entre le fluide de travail et le gaz à traiter, au niveau d'une portion d'entrée (11A) pour le gaz à traiter dans l'échangeur de chaleur (11) et en aval de l'échangeur de chaleur (11), le long de la voie du gaz à traiter, à l'intérieur d'une portion de boîtier du séparateur de condensat (12), dans lequel l'échange de chaleur réalisé par l'échangeur est varié par soumission du fluide de travail à une perte supplémentaire de pression, dans lequel l'étape de soumission du fluide à la perte supplémentaire de pression est réalisée lorsqu'une première température (T1) est détectée, dans la région de la zone d'échange de chaleur entre le fluide de travail et le gaz, sous une température seuil prédéterminée (T_{eb}), dans lequel l'étape de soumission du fluide à la perte supplémentaire de pression est interrompue lorsqu'une seconde température (T2) est détectée, en aval de l'échangeur de chaleur (11), comme étant supérieure à une seconde température seuil (Tₑₕ).

11. Procédé selon la revendication 10, dans lequel le fluide est soumis à la perte supplémentaire de pression pour une période de temps qui n'est pas inférieure à un intervalle de temps prédéterminé (tₘ) à partir d'un moment dans lequel la température seuil (T_{eb}) est atteinte.

12. Procédé selon la revendication 11, dans lequel la compression du fluide de travail est interrompue si, après que la température seuil (T_{eb}) est atteinte à laquelle le fluide est soumis à la perte supplémentaire de pression, la température (T1) détectée par la première sonde (61) ne subit pas d'augmentation pendant un intervalle de temps (t_{ob}) et/ou chute sous une autre valeur seuil (T_{cb}).
